# EUROPEAN PATENT APPLICATION

(11) **EP 4 693 628 A1**
(43) Date of publication of application: **11.02.2026**
(21) Application number: 25179826.0
(22) Date of filing: 30.05.2025
(51) Int. Cl.: H01M 50/103, H01M 50/342, H01M 50/548

(54) **SECONDARY BATTERY COMPRISING HOUSING WITH VENT**

(30) Priority: 01.08.2024 KR 20240102431
(71) Applicant: SAMSUNG SDI CO., LTD., Yongin-si, Gyeonggi-do 17084 (KR)
(72) Inventor: HWANG, Youngjin, 17084 Yongin-Si, Gyeonggi-do (KR)
(74) Representative: Gulde & Partner

(57) **Abstract**

A secondary battery (10) includes: an electrode assembly (300) including a first electrode plate (310), a second electrode plate (320), and a separator (330); a case (100) accommodating the electrode assembly (300), and including an open first side-surface (140) and an open second side-surface (142) that are opposite to each other; and a vent at (110) a surface of the case (100). A thickness (630, 730, 830) of the vent (110) is smaller than a thickness (530) of a portion of the surface of the case (100) without the vent (110).

## Description

### BACKGROUND

### 1. Field

Aspects of embodiments of the present disclosure relate to a secondary battery. Further, a method for manufacturing the secondary battery is disclosed.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Abnormal conditions within the secondary battery can arise due to various causes including short circuits and electrical leakage. For example, if abnormal conditions including abnormal temperature increases occur, gas generation due to internal chemical reactions, or explosions caused by increased internal pressure, may occur. Therefore, a secondary battery that can prevent the occurrence of such abnormalities, and that has increased stability even in the event of abnormal conditions, may be desired.

The above information disclosed in this Background section is for enhancement of understanding of the background of the present disclosure, and therefore, it may contain information that does not constitute related (or prior) art.

### SUMMARY

One or more embodiments of the present disclosure are directed to a secondary battery. Further, a method for manufacturing the secondary battery is disclosed, which is useful for the understanding of the structure of the secondary battery.

These and other aspects and features of the present disclosure will be described in or will be apparent from the following description of embodiments of the present disclosure.

According to one or more embodiments of the present disclosure, a secondary battery includes: an electrode assembly including a first electrode plate, a second electrode plate, and a separator; a case accommodating the electrode assembly, and including an open first side-surface and an open second side-surface that are opposite to each other; and a vent at a surface of the case. A thickness of the vent is smaller than a thickness of a portion of the surface of the case or of a sidewall of the case, which may comprise the surface, without the vent. Hence, due to the relatively smaller thickness of the vent, the case material the vent is made of may be more flexible and may be deformed more readily by pressure rising in the secondary battery.

In an embodiment, the vent may be configured to be opened in response to an internal pressure of the case exceeding a threshold pressure. An advantage of this embodiment may be that the internal pressure may be readily released in case the internal pressure exceeds a threshold pressure.

In an embodiment, the vent may be located at a central portion of the surface of the case. An advantage of this embodiment may be that as central portions are arranged away from edges, which usually are more stable, the vent is even more readily deformable due to its arrangement at the central portion.

In an embodiment, the vent may have a reduced thickness in which at least a portion of the surface of the case may be forged. In particular, the thickness of the vent may be reduced compared to the thickness of the portion of the surface or the sidewall of the case without the vent. Instead of a thickness reduction by forging, the thickness may be reduced by embossing. In particular, the thickness may be reduced by cold deformation of the case material. Reducing the thickness by forging, embossing and/or cold deforming the case material leaves a characteristic micro-structure in the material forming the vent that differs from the microstructure of a material whose thickness is reduced by e.g. milling. An advantage of this embodiment may be that the thickness can be reduced fast and a low cost compared to e.g. milling.

In an embodiment, the at least the portion of the surface of the case may be forged from a lower side thereof. An advantage of this embodiment may be that more free volume is created in the case by the thickness reduction.

In an embodiment, the at least the portion of the surface of the case may be forged from an upper side thereof. An advantage of this embodiment may be that an inner side of the case is not disturbed by the thickness reduction and e.g. by a step caused by the thickness reduction.

In an embodiment, the at least the portion of the surface of the case may be forged from a lower side and an upper side thereof. An advantage of this embodiment may be that forging from two opposite sides may allow for less deformation of each of the sides while still achieving the desired total deformation, i.e. thickness reduction, such that tools like pressing or forging or embossing dies suffer less wear and tear.

In an embodiment, a width of the vent may be 60% or smaller and e.g. less than 60%, less than 50 %, less than 40 % or less than 30 % of a width of the case, e.g. the outer width of the case, and for example of a width of the portion of the surface of the case without the vent. An advantage of this embodiment may be that the structural integrity of the side of the case formed with the vent is less affected by the provision of the vent without affecting the functionality of the vent. Hence, the width may be chosen to provide for the vent to be deformable without affecting the structural integrity of the side of the case formed with the vent. The vent may have a length that extends perpendicular to its width. A surface area of the vent that may be determined by multiplying the length and the width thereof, may be chosen achieve the deformability of the vent required for releasing pressure at the predetermined excess pressure. The length of the vent may be larger than the width of the length. For example, the length may be up to 10%, 25%, 50%, 75%, 100%, 125%, 150%, 175%, 200%, 250%, 300%, 350%, 400%, 450%, 500% or even more the width. For example, the length may be around 33% of the width, e.g. with the length being 50mm and the width being 15mm- The length of the vent may be smaller than the total length of the surface that comprises the vent and may be less than 100%, 90%, 80%, 70%, 60%, 50%, 40%, 30%, 20%, 10% or 5% of the total length of the surface that comprises the vent.

In an embodiment, a thickness of the vent may be 2/3 and e.g. 3/4, 4/5, 5/6 or smaller of a thickness of the portion of the surface or sidewall of the case without the vent. An advantage of this embodiment may be that the vent may be deformed more easily in a defined manner.

In an embodiment, the vent may include a first welding section. The portion of the surface of the case without the vent may include a second welding section. The first welding section and the second welding section may be located along a centerline of the surface of the case. The center line may be parallel to a longitudinal direction of the surface of the case. An advantage of this embodiment may be that the first and second welding section may be formed continuously, thereby improving the structural integrity of the resulting weld seam.

In an embodiment, a maximum depth of the second welding section may be greater than a maximum depth of the first welding section. An advantage of this embodiment may be that the resulting weld seam may be more continuous inside the sidewall, for example in case the difference in maximum depths essentially corresponds to the thickness difference of the vent and the sidewall without the vent.

In an embodiment, a maximum depth of the second welding section may be greater than the thickness of the vent. An advantage of this embodiment may be that the resulting weld seam may be more continuous inside the sidewall.

In an embodiment, a fracture strength of the second welding section may be lower or higher than a fracture strength of the first welding section. An advantage of this embodiment may be that the fracture strength may be tunes to the desired excess pressure that is to be released via the vent.

In an embodiment, the secondary battery may further include: a first cap plate covering the open first side-surface of the case; and a first terminal penetrating through the first cap plate, and electrically connected to a first electrode tab of the electrode assembly. The secondary battery may further include: a second cap plate covering the open second side-surface of the case; and a second terminal penetrating through the second cap plate, and electrically connected to a second electrode tab of the electrode assembly. An advantage of this embodiment may be that the opposite terminals can be connected more easily.

In an embodiment, the case may include: a first long sidewall and a second long sidewall opposite to each other and spaced from each other. The case may include: a first short sidewall and a second short sidewall opposite to each other and spaced from each other. The first short and the second short sidewall may respectively interconnect different and e.g. opposite edges of the first and second long sidewalls. An area of each of the first short sidewall and the second short sidewall may be smaller than an area of each of the first long sidewall and the second long sidewall. The surface of the case that comprises the vent may be one of the first short sidewall or the second short sidewall. An advantage of this embodiment may be that larger sidewalls usually are more deformably than smaller sidewalls, such that placing the vent on one of the first and second short sidewalls allows the more mechanically stable short sidewall to edge the vent, which improves the definition of the excess pressure released by the vent.

According to one or more further embodiments of the present disclosure, a method for manufacturing a secondary battery, includes: preparing an electrode assembly including a first electrode plate, a second electrode plate, and a separator; preparing a rectangular plate-shaped member including vents, each of the vents corresponding to a portion of the plate-shaped member having a reduced thickness that is formed by forging a region of the plate-shaped member that includes a portion of each of opposite side ends of the plate-shaped member, the opposite side ends including a first side end and a second side end; performing a primary folding of the plate-shaped member by bending regions that include the opposite side ends of the plate-shaped member in a direction crossing an upper surface of the plate-shaped member; performing a secondary folding of the plate-shaped member by bending the plate-shaped member to allow the opposite side ends to face each other; and welding the opposite side ends to each other to form a case that accommodates the electrode assembly, the case including an open first side-surface and an open second side-surface that are opposite to each other.

In an embodiment, the vents may include a first vent or first vent part formed at at least a portion of the first side end of the plate-shaped member, and a second vent or second vent part formed at at least a portion of the second side end of the plate-shaped member, the second side end being opposite to the first side end. An advantage of this embodiment may be that the case including the vent may be formed in a single or in two consecutive steps, e.g. by combined punching and forging or embossing or by consecutive punching and then forging or embossing. The performing of the secondary folding of the plate-shaped member may include bending the plate-shaped member to allow the first vent and the second vent to face each other.

In an embodiment, a first welding section may be formed by welding the first vent and the second vent to each other, a second welding section may be formed by welding a portion of the first side end excluding the first vent and a portion of the second side end excluding the second vent to each other, and a maximum depth of the second welding section may be greater than a maximum depth of the first welding section. An advantage of this embodiment may be that the resulting weld seam may be more continuous inside the sidewall, for example in case the difference in maximum depths essentially corresponds to the thickness difference of the vent and the sidewall without the vent.

In an embodiment, the maximum depth of the second welding section may be greater than a thickness of the vent. An advantage of this embodiment may be that the resulting weld seam may be more continuous inside the sidewall.

In an embodiment, the method may further include: inserting the electrode assembly into the case; coupling a first cap plate to the open first side-surface of the case, the first cap plate being electrically connected to a first electrode tab of the electrode assembly, and including a first terminal formed through the first cap plate; and coupling a second cap plate to the open second side-surface of the case, the second cap plate being electrically connected to a second electrode tab of the electrode assembly, and including a second terminal formed through the second cap plate. An advantage of this embodiment may be that the secondary battery can be assembled easily.

According to some embodiments of the present disclosure, the terminals may be positioned at opposite side-surfaces of the case, and the vent may be formed at the upper surface or the lower surface of the case. An advantage of this embodiment may be that space in the secondary battery may be more efficiently utilized.

According to some embodiments of the present disclosure, a vent function of the secondary battery may be achieved by forming a thinner portion at one surface of the case without adding separate components for the vent function. An advantage of this embodiment may be that a manufacturing process of the secondary battery may be simplified, and costs may be reduced by eliminating or reducing the additional components to perform the vent function.

According to some embodiments of the present disclosure, the vent may be formed with a reduced thickness compared to another portion having no vent in the first surface of the case. An advantage of this embodiment may be that the vent may be opened earlier than the other portion of the first surface of the case in response to an internal pressure of the case exceeding a threshold pressure (e.g., a predetermined threshold pressure), or in response to the internal temperature of the case exceeding a threshold temperature (e.g., a predetermined threshold temperature).

According to some embodiments of the present disclosure, the first terminal and the second terminal may be provided at opposite side-surfaces of the secondary battery, and the vent may be provided at a surface where the terminals are not provided. An advantage of this embodiment may be that the secondary battery may have improved insulation performance and space efficiency, while allowing gas discharged through the vent to be smoothly released through the surface (e.g., the upper surface) of the secondary battery where no terminals are provided.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view of a secondary battery according to some embodiments of the present disclosure.
FIG. 2 illustrates a cross-sectional view of a secondary battery according to some embodiments of the present disclosure.
FIG. 3 illustrates a perspective view of a case according to some embodiments of the present disclosure.
FIG. 4 illustrates an example of a winding-kind of electrode assembly according to some embodiments of the present disclosure.
FIG. 5 illustrates an example of a portion of one surface of a case that does not include a vent according to some embodiments of the present disclosure.
FIG. 6 illustrates an example of a portion of one surface of a case that includes a vent according to some embodiments of the present disclosure.
FIG. 7 illustrates an example of a portion of one surface of a case that includes a vent according to an embodiment of the present disclosure.
FIG. 8 illustrates an example of a portion of one surface of a case that includes a vent according to an embodiment of the present disclosure.
FIG. 9 illustrates an enlarged view of a vent according to some embodiments of the present disclosure.
FIGS. 10-12 illustrate a process of manufacturing a case for a secondary battery according to some embodiments of the present disclosure.
FIG. 13 illustrates a flowchart of a method for manufacturing a secondary battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present specification, the singular forms "a," "an," and "the" are intended to include the plural forms as well unless the context clearly indicates the singular forms. Further, the plural forms are intended to include the singular forms as well, unless the context clearly indicates the plural forms. Furthermore, in the present specification, when one part is referred to as "comprising" (or "including" or "having") other elements, the part can comprise (or include or have) only those elements or other elements as well as those elements unless specifically described otherwise.

In the present disclosure, the sizes and relative sizes of layers and regions shown in the drawings may be exaggerated for clarity of description. That is, the sizes shown in the drawings are only for convenience of understanding and are not limited thereto. Throughout the specification, like reference numerals will be given to like parts.

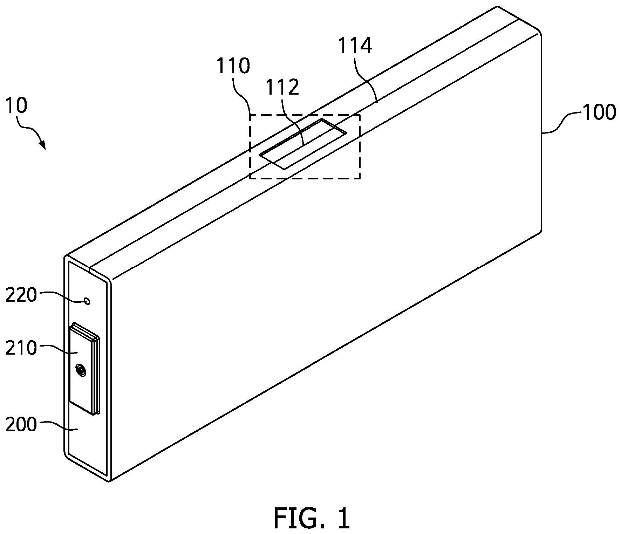

FIG. 1 illustrates a perspective view of a secondary battery according to some embodiments of the present disclosure. A secondary battery 10 may include an electrode assembly, and a case 100 that accommodates the electrode assembly and has two open side-surfaces formed opposite to each other. A vent 110 may be formed at one surface of the case 100. The secondary battery 10 may further include a first cap plate 200 that covers an open first side-surface of the case 100, and a first terminal 210 electrically connected to the electrode assembly and passing through the first cap plate 200. A second cap plate may cover an open second side-surface of the case 100, and a second terminal may be electrically connected to the electrode assembly and pass through the second cap plate. The open first side-surface and the open second side-surface of the case 100 may be opposite to each other.

The electrode assembly may be accommodated in the case 100. The electrode assembly may be formed by winding or stacking a laminate including a first electrode plate, a separator, and a second electrode plate, which are respectively formed as thin plates or films. In a case where the electrode assembly is a wound laminate, a winding axis thereof may be parallel to a longitudinal direction of the case 100. In other embodiments, the electrode assembly may be of a stack kind instead of being a winding kind, and the shape of the electrode assembly is not particularly limited. In addition, the electrode assembly may be a Z-stack electrode assembly in which a positive electrode plate and a negative electrode plate are provided on opposite sides of a separator bent as a Z-stack. In some embodiments, one or more electrode assemblies may be stacked so that long sides of the electrode assemblies are adjacent to each other and accommodated in the case 100, and the number of electrode assemblies is not particularly limited. The first electrode plate of the electrode assembly may serve as a positive electrode, and the second electrode plate may serve as a negative electrode. As another example, the first electrode plate of the electrode assembly may serve as the negative electrode, and the second electrode plate may serve as the positive electrode.

The first electrode plate may be formed by applying a first electrode active material, such as graphite or carbon, onto a first electrode current collector formed of a metal foil, such as copper, a copper alloy, nickel, or a nickel alloy. The first electrode plate may include a first electrode tab (e.g., a first uncoated portion) that is a region onto which the first electrode active material is not applied. The first electrode tab may serve as a current flow path between the first electrode plate and the first terminal. In some embodiments, the first electrode tab may be formed by cutting the first electrode plate in advance during a fabrication process of the first electrode plate, such that the first electrode tab protrudes toward a first side of the electrode assembly, and may extend further out than the separator without requiring an additional cutting.

The second electrode plate may be formed by applying a second electrode active material, such as a transition metal oxide, onto a second electrode current collector formed of a metal foil, such as aluminum or an aluminum alloy. The second electrode plate may include a second electrode tab (e.g., a second uncoated portion) that is a region onto which the second electrode active material is not applied. The second electrode tab may serve as a current flow path between the second electrode plate and the second terminal. In some embodiments, the second electrode tab may be formed by cutting the second electrode plate in advance during a fabrication process of the second electrode plate, such that the second electrode tab protrudes toward a second side (e.g., the opposite side of the first side), and may extend further than the separator without requiring an additional cutting.

In some embodiments, the first electrode tab may be located on the right side of the electrode assembly, and the second electrode tab may be located on the left side of the electrode assembly. For convenience of illustration, the left and right sides are defined according to the secondary battery as oriented in FIG. 1, but the positions thereof may change when the secondary battery is rotated left and right or up and down.

As illustrated in FIG. 1, the vent 110 may be formed at one surface of the case 100. For example, the one surface of the case 100 at which the vent 110 is formed may correspond to an upper surface of the case 100. The upper surface refers to the surface facing upward when the secondary battery 10 is finally installed, but the present disclosure is not limited thereto.

In an embodiment, the vent 110 may be formed at a central portion of one surface of the case 100.

In an embodiment, the case 100 may accommodate the electrode assembly along with an electrolyte solution therein. In more detail, the electrode assembly may be received into the case 100 through the open first side-surface of the case 100, or the open second side-surface of the case opposite to the open first side-surface. The open side-surface may refer to an opening of the case 100. The first cap plate 200 may cover the open first side-surface of the case 100, and the second cap plate may cover the open second side-surface of the case 100. Further, an electrolyte injection hole 220 may be formed at the first cap plate 200, and the electrolyte solution may be injected into the case 100 through the electrolyte injection hole 220. FIG. 1 shows that the electrolyte injection hole 220 is formed at the first cap plate 200, but the present disclosure is not limited thereto. For example, the electrolyte injection hole may be formed at the second cap plate, and the electrolyte solution may be injected into the case 100 through the electrolyte injection hole formed at the second cap plate. After the injection of the electrolyte solution is completed, the electrolyte injection hole 220 may be sealed using a sealing member, such as a stopper or the like.

The first terminal 210 may be arranged on the first cap plate 200, and may extend further through the first cap plate 200 to be electrically connected to the first electrode tab of the electrode assembly. Similarly, a second terminal may be arranged on the second cap plate, and may extend further through the second cap plate to be electrically connected to the second electrode tab of the electrode assembly. The first terminal 210 may be a positive electrode terminal, and the second terminal may be a negative electrode terminal. Accordingly, a positive electrode terminal indication (+) may be formed on the first cap plate 200 by engraving or the like. Similarly, a negative electrode terminal indication (-) may be formed on the second cap plate by engraving or the like. In other embodiments, the first terminal 210 may be the negative electrode terminal, and the second terminal may be the positive electrode terminal. In this case, the negative electrode terminal indication (-) may be formed on the first cap plate 200 by engraving or the like, and the positive electrode terminal indication (+) may be formed on the second cap plate by engraving or the like.

In an embodiment, a length of a long side of the first terminal 210 and a length of a long side of the second terminal may be equal to or greater than half of a length of a long side of the first cap plate 200 and half of a length of a long side of the second cap plate, respectively. Additionally, a length of a short side of the first terminal 210 and a length of a short side of the second terminal may be equal to or greater than half of a length of a short side of the first cap plate 200 and half of a length of a short side of the second cap plate, respectively. As such, heat dissipation may be improved due to an increased volume of the terminals, and heat generation may be reduced due to the increased welding area of the busbar of the secondary battery.

In an embodiment, the vent 110 may be formed at one surface of the case 100 (e.g., at the upper surface of the case). The vent 110 may be opened in response to an internal pressure of the secondary battery 10 exceeding a threshold pressure (e.g., a predetermined threshold pressure). In this case, the threshold pressure may be different depending on the applications, materials, purpose, and/or the like of the secondary battery 10. For example, a relatively high threshold pressure may be used for a secondary battery in which the internal pressure of the case is maintained at a higher pressure on average compared to other applications due to short charge-discharge cycles during use. In another example, a relatively high threshold pressure may be used for a secondary battery that is manufactured with a material and/or design that has relatively high heat and/or pressure resistance. On the other hand, a relatively low threshold pressure may be used for a secondary battery that is manufactured with a material and/or design that has relatively low heat and/or pressure resistance. Additionally, the vent 110 may be opened in response to an internal temperature exceeding a threshold temperature (e.g., a predetermined threshold temperature). In this case, the vent 110 may serve to prevent or substantially prevent an explosion of the secondary battery 10, and/or prevent or substantially prevent a chain exothermic reaction of other secondary batteries that are arranged adjacent to the secondary battery 10.

In an embodiment, the vent 110 may be formed as a thinner portion compared to the rest of the portions of one surface (e.g., the upper surface) of the case 100 at which the vent 110 is formed. The vent 110 may be a portion that is formed with a reduced thickness by forging at least a portion of one surface of the case 100 at which the vent 110 is formed. By forming the vent 110 with the reduced thickness compared to the rest of the portions of the one surface or sidewall of the case 100, the vent 110 may opened earlier than any other portion of the one surface of the case 100 in response the internal pressure of the case 100 exceeding a threshold pressure (e.g., a predetermined threshold pressure), or in response to the internal temperature of the case 100 exceeding a threshold temperature (e.g., a predetermined threshold temperature).

In FIG. 1, a single vent 110 is illustrated as being formed at the center of one surface of the case 100. However, the number of vents is not limited thereto, and any suitable number of vents 110 may be formed at arbitrary positions at the one surface of the case 100. For example, two or more vents 110 may be formed at the one surface of the case 100.

In an embodiment, the vent 110 may include a first welding section 112, while the other portions of the one surface of the case, excluding the vent, may include a second welding section 114. The first welding section 112 and the second welding section 114 may be formed along a centerline of one surface of the case, which is parallel to or substantially parallel to the longitudinal direction of the one surface of the case. For example, as shown in FIG. 1, the first welding section 112 and the second welding section 114 may be formed along a centerline of the upper surface of the case, which is parallel to or substantially parallel to the longitudinal direction of the upper surface of the case.

As described above, the first terminal 210 and the second terminal may be provided at the opposite side-surfaces of the secondary battery 10, and the vent 110 may be provided at the surface where the terminals are not provided (e.g., the upper surface of the secondary battery 10). In this case, the secondary battery may have improved insulation performance and space efficiency, while allowing the gas that is discharged through the vent 110 to be smoothly released through the upper surface of the secondary battery 10 where no terminals are provided.

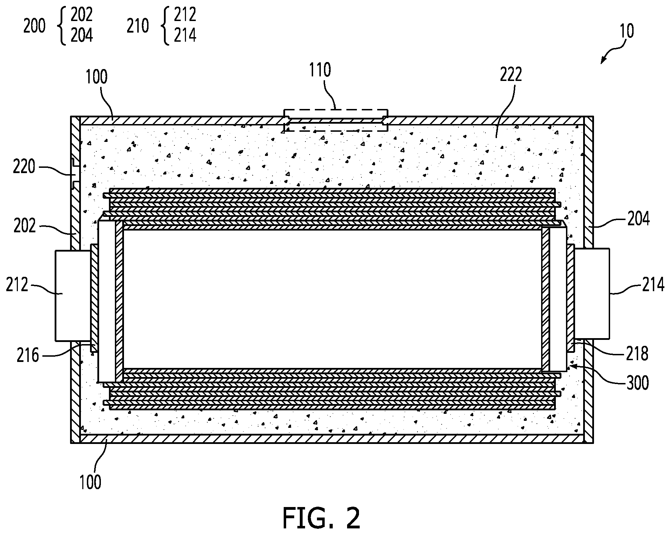

FIG. 2 illustrates a cross-sectional view of a secondary battery according to some embodiments of the present disclosure. Referring to FIG. 2, the secondary battery 10 may include an electrode assembly 300, the case 100, the vent 110, a first cap plate 202, a second cap plate 204, a first terminal 212, a second terminal 214, and an electrolyte solution 222. The first cap plate 202 may correspond to the first cap plate 200 described above with reference to FIG. 1, and the second cap plate 204 may correspond to the second cap plate described above. Additionally, the first terminal 212 may correspond to the first terminal 210 described above with reference to FIG. 1, and the second terminal 214 may correspond to the second terminal described above.

The electrode assembly 300 may be accommodated in the case 100 along with the electrolyte solution 222, and may include a first electrode, a second electrode, and a separator. The vent 110 may be formed at one surface of the case 100. The vent 110 may be opened in response to a case where the internal pressure of the case 100 exceeds a threshold pressure (e.g., a predetermined threshold pressure), and thus, allowing gases inside the case 100 to be released.

The first cap plate 202 and the second cap plate 204 may cover the two open side-surfaces of the case 100 that are opposite to each other, respectively. The first terminal 212 may be formed to pass through the first cap plate 202, and may be electrically connected to the first electrode tab of the electrode assembly 300. Similarly, the second terminal 214 may be formed to pass through the second cap plate 204, and may be electrically connected to the second electrode tab of the electrode assembly 300. For example, the terminals 212 and 214 may be in contact with lead members formed at opposite sides inside the case 100, respectively. The lead members may be in contact with the current collectors that are electrically connected to the electrode assembly 300 inside the case 100, respectively. Thus, the terminals 212 and 214 may be electrically connected to the electrode assembly 300. One of the terminals 212 and 214 may serve as the positive electrode terminal, and the other may serve as the negative electrode terminal.

The electrolyte injection hole 220 may be formed at the first cap plate 202. The electrolyte solution 222 may be injected into the case 100 through the electrolyte injection hole 220. Additionally, after the injection of the electrolyte solution 222 is completed, the electrolyte injection hole 220 may be sealed using a sealing stopper to prevent or substantially prevent leakage of the electrolyte solution 222. As another example, the electrolyte injection hole 220 may be formed at the second cap plate 204.

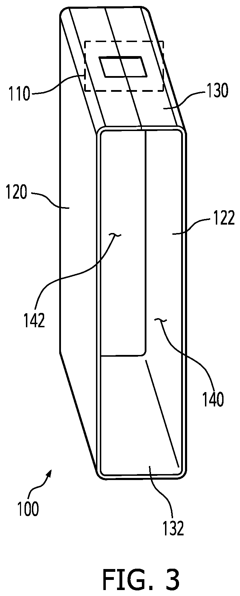

FIG. 3 illustrates a perspective view of a case according to some embodiments of the present disclosure. Referring to FIG. 3, the case 100 may include long sidewalls facing or opposite to each other, short sidewalls facing or opposite to each other, an open first side-surface 140, and an open second side-surface 142.

The long sidewalls may include a first long sidewall 120 and a second long sidewall 122. The first long sidewall 120 and the second long sidewall 122 may face or be opposite to each other. The first long sidewall 120 and the second long sidewall 122 may face or be opposite to each other while being spaced apart from each other

The short sidewalls may include a first short sidewall 130 and a second short sidewall 132. The first short sidewall 130 and the second short sidewall 132 may face or be opposite to each other. The first short sidewall 130 and the second short sidewall 132 may face or be opposite to each other while being be spaced apart from each other. An area of each of the first short sidewall 130 and the second short sidewall 132 may be smaller than that of each of the first long sidewall 120 and the second long sidewall 122.

The open first side-surface 140 and the open second side-surface 142 may be formed at the opposite side-surfaces of the case 100. The open second side-surface 142 may be opposite to the open first side-surface 140. The open first side-surface 140 and the open second side-surface 142 may be spaced apart from each other. Each of the open first side-surface 140 and the open second side-surface 142 may refer to an opening of the case 100.

The case 100 may be formed from a conductive metal, such as aluminum, an aluminum alloy, a nickel-plated steel, or the like.

The first cap plate 202 may be connected to (e.g., coupled to or attached to) the case 100 to cover the open first side-surface 140. The second cap plate 204 may be connected to (e.g., coupled to or attached to) the case 100 to cover the open second side-surface 142. For example, each of the first cap plate 202 and the second cap plate 204 may be connected to (e.g., coupled to or attached to) the case 100 by welding. The first cap plate 202 and the second cap plate 204 may seal the case 100.

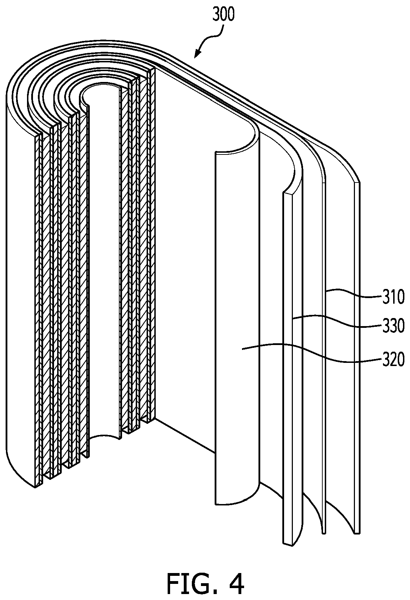

FIG. 4 illustrates an example of a winding-kind of electrode assembly according to some embodiments of the present disclosure. Referring to FIG. 4, the electrode assembly 300 may include a first electrode plate 310, a second electrode plate 320, and a separator 330.

In an embodiment, the electrode assembly 300 may be formed as a jelly roll kind of wound structure in which the first electrode plate 310 and the second electrode plate 320 are wound together with the separator 330, which is an insulator, interposed between the first electrode plate 310 and the second electrode plate 320. However, the present disclosure is not limited thereto, and the electrode assembly may be provided as a laminated structure in which the first electrode plate 310 and the second electrode plate 320 are laminated together with the separator 330, which is an insulator, interposed between the first electrode plate 310 and the second electrode plate 320.

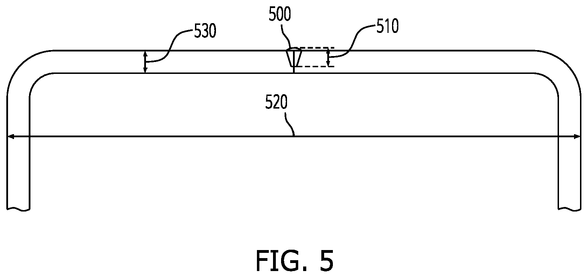

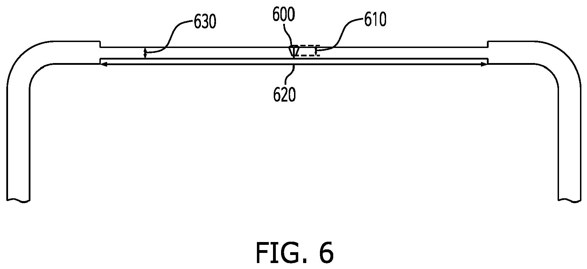

FIG. 5 illustrates an example of a portion of one surface of a case that does not include the vent according to some embodiments of the present disclosure. FIG. 6 illustrates an example of a portion of one surface of a case that includes a vent according to some embodiment of the present disclosure. In more detail, FIG. 5 illustrates a cross-sectional view of a portion having no vent in a first surface of a case, and FIG. 6 illustrates a cross-sectional view of a portion having the vent in the first surface of the case.

Referring to FIGS. 5 and 6, a thickness 630 of the vent may be smaller than a thickness 530 of a portion having no vent in the first surface of the case. The portion may be a sidewall of the case. The vent may be a portion, e.g. of a sidewall of the case, having a reduced thickness in the first surface or sidewall of the case that is formed by forging at least a portion of the first surface of the case at which the vent is formed. The thickness of the sidewall may be reduced to form the vent. The thickness of the sidewall at the vent may be less than a section of that sidewall without the vent, e.g. a section that neighbors or surrounds or borders the vent. In more detail, a thickness of at least a portion of the sidewall with the first surface of the case may be reduced by forging at least the portion of the first surface of the case from an upper side and a lower side thereof (e.g., from an upper side and a lower side of at least the portion of the first surface of the case), and a portion where the thickness of at least the portion of the sidewall with the first surface of the case is reduced may be the vent. By forming the vent to have the reduced thickness compared to the other portion having no vent in the first surface of the case, the vent may be opened earlier than the other portion having no vent in the first surface of the case in response to the internal pressure of the case exceeding a threshold pressure (e.g., a predetermined threshold pressure), or in response to the internal temperature of the case exceeding a threshold temperature (e.g., a predetermined threshold temperature).

In an embodiment, a width 620 of the vent may be 60% or smaller of a width 520 of the portion having no vent in the first surface of the case. For example, in a case where the width 520 of the portion having no vent in the first surface of the case is 25mm, the width 620 of the vent may be formed to be 15mm or smaller. By forming the width 620 of the vent to be 60% or smaller of the width 520 of the portion having no vent in the first surface of the case, a premature opening of the vent before the internal pressure of the case exceeds the threshold pressure (e.g., the predetermined threshold pressure) may be prevented.

In an embodiment, the thickness 630 of the vent may be 2/3 or smaller of the thickness 530 of the portion having no vent in the first surface of the case.

In an embodiment, the vent may include a first welding section 600, and the portion having no vent in the first surface of the case may include a second welding section 500. The first welding section 600 and the second welding section 500 may be formed along a centerline of the first surface of the case, which is parallel to or substantially parallel to the longitudinal direction of the first surface of the case.

In an embodiment, the maximum depth 510 of the second welding section 500 may be greater than the maximum depth 610 of the first welding section. Further, the maximum depth 510 of the second welding section 500 may be greater than the thickness 630 of the vent. For example, in a case where the thickness 530 of the portion having no vent in the first surface of the case is 0.6 mm and the thickness 630 of the vent is 0.4 mm, the maximum depth 510 of the second welding section may be 0.5 mm and the maximum depth 610 of the first welding section may be 0.2 mm. As such, in response to a case where the internal pressure of the case exceeds a threshold pressure (e.g., a predetermined threshold pressure), the vent may be opened before the portion having no vent in the first surface of the case.

In an embodiment, a fracture strength of the second welding section 500 may be lower or higher than that of the first welding section 600. Therefore, the second welding section 500 may fracture before the first welding section 600 or vice versa, causing the vent to open earlier than the portion having no vent in the first surface of the case.

In an embodiment, the first welding section 600 included in the vent may be formed through a ring beam welding, while the second welding section 500 included in the portion having no vent in the first surface of the case may be formed through a keyhole welding. The keyhole welding may be a welding method that allows for relatively deeper welds compared to that of the ring beam welding. Thus, the second welding section 500 may have a deeper welding depth compared to that of the first welding section 600. Additionally, by forming the first welding section 600 in the vent through the ring beam welding, a residual stress in the vent may be relieved due to the heat generated during the process of the ring beam welding.

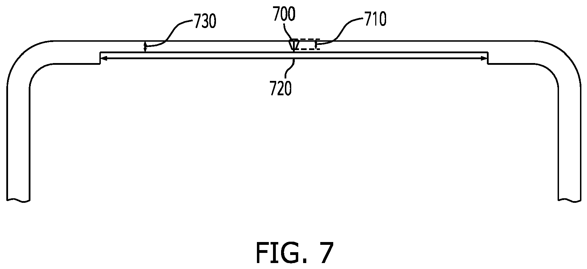

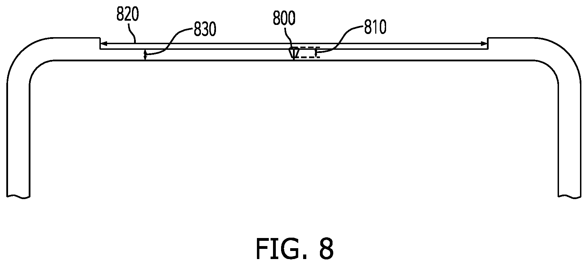

FIG. 7 illustrates an example of a portion of one surface of a case that includes a vent according to an embodiment of the present disclosure. FIG. 8 illustrates an example of a portion of one surface of a case that includes a vent according to an embodiment of the present disclosure. In more detail, FIGS. 7 and 8 each illustrate a cross-sectional view of a portion having a vent in a first surface of a case.

Referring to FIG. 7, a vent may be a portion where a thickness of at least a portion of the sidewall with a first surface of a case is reduced by forging at least the portion of the first surface of the case from a lower side thereof. Hence, the first surface may be an inner surface of the case 10.

Referring to FIG. 8, a vent may be a portion where a thickness of at least a portion of the sidewall with a first surface of a case is reduced by forging at least the portion of the first surface of the case from an upper side thereof. Hence, the first surface may be an outer surface of the case 10.

The maximum depths 710 and 810 of the first welding sections, the widths 720 and 820 of the vents, and the thicknesses 730 and 830 of the vents shown in FIGS. 7 and 8 may be the same or substantially the same as those described above with reference to FIGS. 5 and 6, and thus, redundant description thereof may not be repeated.

By forming the vent in the shape shown in FIG. 7 or FIG. 8, the forging process for at least a portion of the first surface of the case may be simplified. For example, the vent may be formed by forging at least a portion of the first surface of the case in only one direction (e.g., in an upward direction or a downward direction), thereby simplifying the process for manufacturing the vent.

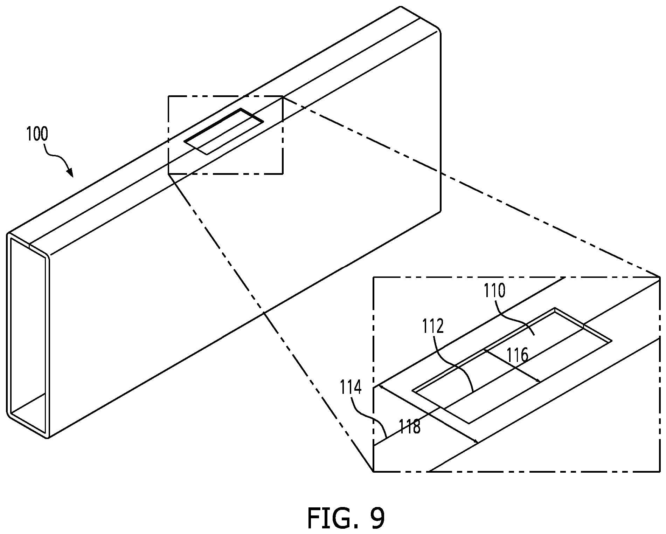

FIG. 9 illustrates an enlarged view of a vent according to some embodiments of the present disclosure. Referring to FIG. 9, the vent 110 may be formed at at least a portion of a first surface of the case 100. The first surface of the case 100 may correspond to an upper surface or a lower surface of the case 100.

In an embodiment, the vent 110 may be a portion having a reduced thickness in the sidewall that comprises the first surface of the case 100 that is formed by forging at least a portion of the first surface of the case at which the vent is formed. Referring to FIG. 9, the vent 110 may be a portion where a thickness of at least a portion of the sidewall with a first surface of a case is reduced by forging at least the portion of the first surface of the case from the upper side thereof. Additionally, the thickness of the vent 110 may be reduced by forging at least the portion of the first surface of the case from the lower side thereof.

In an embodiment, the vent 110 may be formed at the central portion of the first surface of the case 100.

In an embodiment, a width 116 of the vent may be 60% or smaller of a width 118 of the portion having no vent in the first surface of the case. For example, in a case where the width 118 of the portion having no vent in the first surface of the case is 25mm, the width 116 of the vent may be formed to be 15mm or smaller. By forming the width 116 of the vent to be 60% or smaller of the width 118 of the portion having no vent in the first surface of the case, a premature opening of the vent before the internal pressure of the case exceeds a threshold pressure (e.g., a predetermined threshold pressure) may be prevented.

In an embodiment, the vent may include a first welding section 112, and the portion having no vent in the first surface of the case may include a second welding section 114. The first welding section 112 and the second welding section 114 may be formed along the centerline of the first surface of the case, which is parallel to or substantially parallel to the longitudinal direction of the first surface of the case.

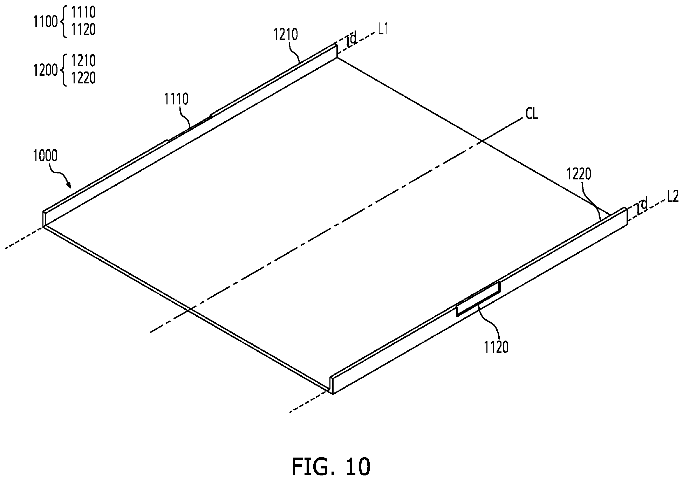

FIGS. 10 through 12 illustrate a process of manufacturing a case for a secondary battery according to some embodiments of the present disclosure. In some embodiments, the case for the secondary battery may be manufactured using the processes illustrated in FIGS. 10 to 12.

First, a rectangular plate-shaped member 1000 is prepared, and each of the vents 1100 may be formed by forging a region that includes a portion of each of the opposite side ends 1200 of the plate-shaped member 1000. Here, the opposite side ends 1200 may include a first side end 1210 and a second side end 1220, and each of the vents 1100 may refer to a portion where a thickness of a region including a portion of each of the first side end 1210 and the second side end 1220 is reduced. The vents 1100 may include a first vent 1110 and a second vent 1120.

Next, referring to FIG. 10, a primary folding of the plate-shaped member 1000 may be performed by bending the plate-shaped member 1000 along an imaginary straight line L1, which is spaced apart from the first side end 1210 in a first direction by a distance d, in a direction crossing or intersecting with an upper surface of the plate-shaped member 1000. The primary folding may further include bending the plate-shaped member 1000 along an imaginary straight line L2, which is spaced apart from the second side end 1220 in a second direction opposite to the first direction by a distance d, in the direction crossing or intersecting with the upper surface of the plate-shaped member 1000. The direction crossing or intersecting with the upper surface of the plate-shaped member 1000 may refer to a direction that is perpendicular or substantially perpendicular to the upper surface of the plate-shaped member 1000, but the present disclosure is not limited thereto.

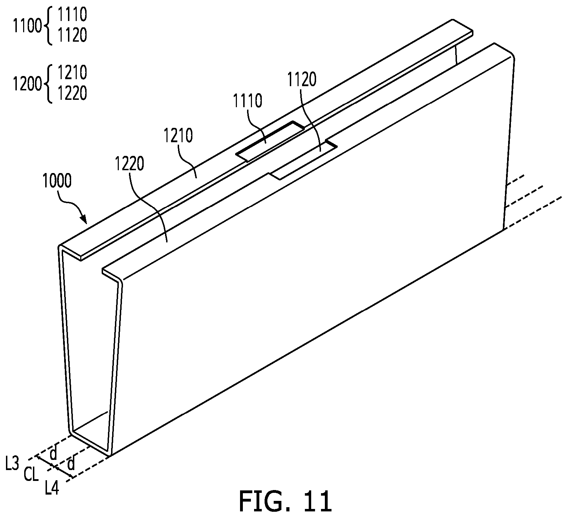

Referring to FIG. 11, a secondary folding of the plate-shaped member 1000 may be performed by bending the primarily folded plate-shaped member 1000 along an imaginary straight line L3, which is spaced apart from a centerline CL of the plate-shaped member 1000 in the second direction by a distance d, in the direction crossing or intersecting with the upper surface of the plate-shaped member 1000. The secondary folding may further include bending the primarily folded plate-shaped member 1000 along an imaginary straight line L4, which is spaced apart from the centerline CL in the first direction by a distance d, in the direction crossing or intersecting with the upper surface of the plate-shaped member 1000. At this time, the plate-shaped member 1000 may be folded so that the two side ends 1210 and 1220 of the plate-shaped member 1000 face each other.

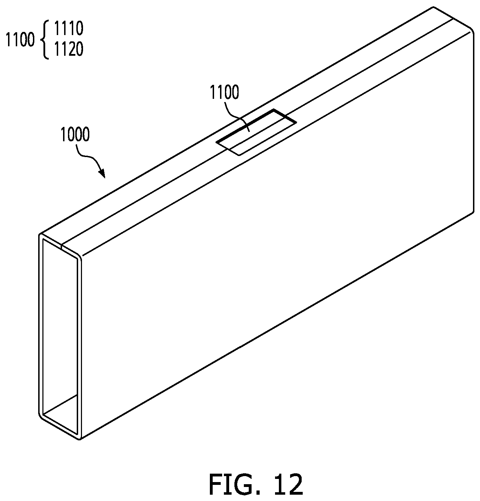

Next, referring to FIG. 12, by welding the first side end 1210 and the second side end 1220 of the plate-shaped member 1000 to each other, a case having two open side-surfaces that are opposite to each other may be formed. The first welding section may be formed by welding the first vent 1110 and the second vent 1120 to each other, and the second welding section may be formed by welding the portion of the first side end 1210 excluding the first vent 1110 and the portion of the second side end 1220 excluding the second vent 1120 to each other. The maximum depth of the second welding section may be greater than the maximum depth of the first welding section.

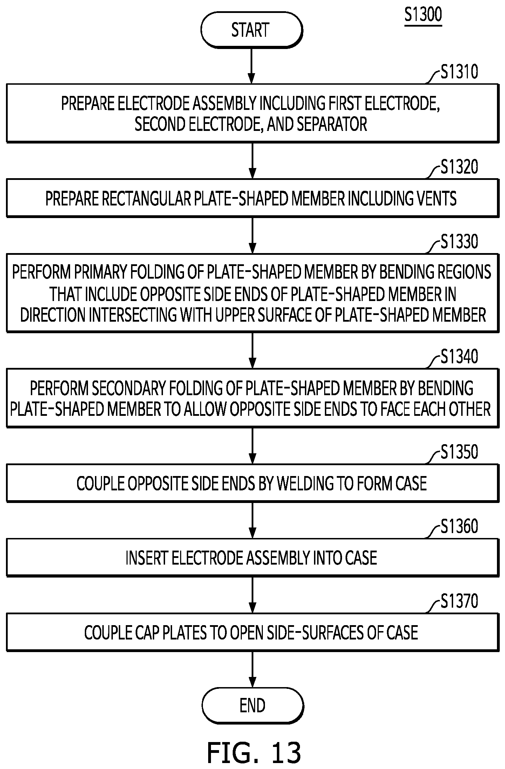

FIG. 13 illustrates a flowchart of a method S1300 for manufacturing a secondary battery according to some embodiments of the present disclosure.

Referring to FIG. 13, an electrode assembly including a first electrode, a second electrode, and a separator may be prepared (S1310). In addition, a rectangular plate-shaped member including vents may be prepared (S1320). Each of the vents may be a portion having a reduced thickness that is formed by forging a region that includes a portion of each of the opposite side ends of the plate-shaped member, and the opposite side ends may include a first side end and a second side end.

In an embodiment, the vents include a first vent that is formed at at least a portion of the first side end of the plate-shaped member, and a second vent that is formed at at least a portion of the second side end of the plate-shaped member, the second side end being opposite to the first side end.

A primary folding of the plate-shaped member may be performed by bending regions that include the opposite side ends of the plate-shaped member in a direction crossing or intersecting with the upper surface of the plate-shaped member (S1330).

A secondary folding of the plate-shaped member may be performed by bending the plate-shaped member to allow the opposite side ends to face each other (S1340). The plate-shaped member may be folded to also allow the first vent and the second vent to face each other.

The opposite side ends may be welded together to form the case (S1350). The case may accommodate the electrode assembly, and may include two side-surfaces opposite to each other.

In an embodiment, the first welding section may be formed by welding the first vent and the second vent to each other, and the second welding section may be formed by welding the portion of the first side end excluding the first vent and the portion of the second side end excluding the second vent to each other. The maximum depth of the second welding section may be greater than the maximum depth of the first welding section.

In an embodiment, the maximum depth of the second welding section may be greater than the thickness of the vent. The electrode assembly may be inserted into the case (S1360), and cap plates may be connected to (e.g., coupled to or attached to) the open side-surfaces of the case (S1370). The cap plates may include a first cap plate and a second cap plate. The first cap plate is connected to (e.g., coupled to or attached to) the open first side-surface of the case, and the second cap plate is connected to (e.g., coupled to or attached to) the open second side-surface of the case. Additionally, the first cap plate may be electrically connected to a first electrode tab of the electrode assembly, and may include a first terminal that penetrates through the first cap plate. The second cap plate may be electrically connected to a second electrode tab of the electrode assembly, and may include a second terminal that penetrates through the second cap plate.

The embodiments of the present disclosure described above are provided for purposes of illustration, and it will be understood by those skilled in the art that various modifications, changes, and additions are made within the scope of the present disclosure, and such modifications, changes, and additions should be regarded as falling within the scope of the claims.

Various replacements, modifications, and changes may be made without departing from the scope of the present disclosure by those skilled in the art. Therefore, the present disclosure is not limited by the above-described embodiment and the accompanying drawings. Although the present disclosure has been described above with respect to embodiments thereof, the present disclosure is not limited thereto. Various modifications and variations can be made thereto by those skilled in the art within the scope of the present disclosure and the scope of the appended claims.

### DESCRIPTION OF SOME REFERENCE SYMBOLS

- 10: Secondary battery
- 100: Case
- 110: Vent
- 112: First welding section
- 114: Second welding section
- 116: Width
- 118: Width
- 120: First long sidewall
- 122: Second long sidewall
- 130: First short sidewall
- 132: Second short sidewall
- 140: Open first side-surface
- 142: Open second side-surface
- 200: First cap plate
- 202: First cap plate
- 204: Second cap plate
- 210: First terminal
- 212: First terminal
- 214: Second terminal
- 220: Electrolyte injection hole
- 222: Electrolyte solution
- 300: Electrode assembly
- 310: First electrode plate
- 320: Second electrode plate
- 330: Separator
- 500: Second welding section
- 510: Maximum depth
- 520: Width
- 530: Thickness
- 600: First welding section
- 610: Maximum depth
- 620: Width
- 630: Thickness
- 1000: Plate-shaped member
- 1100: Vents
- 1110: First vent
- 1120: Second vent
- 1200: Opposite side ends
- 1210: First side end
- 1220: Second side end

## Claims

1. A secondary battery (10) comprising:
an electrode assembly (300) comprising a first electrode plate (310), a second electrode plate (320), and a separator (330);
a case (100) accommodating the electrode assembly (300), and comprising an open first side-surface (140) and an open second side-surface (142) that are opposite to each other; and
a vent (110) at a surface of a sidewall of the case (100),
wherein a thickness (630, 730, 830) of the vent (110) is smaller than a thickness (530) of a portion of the sidewall of the case (100) without the vent (110).

2. The secondary battery (10) as claimed in claim 1, wherein the vent (110) is configured to be opened in response to an internal pressure of the case (100) exceeding a threshold pressure.

3. The secondary battery (10) as claimed in claim 1 or 2, wherein the vent (110) is located at a central portion of the surface of the case (100).

4. The secondary battery (10) as claimed in any of claims 1 to 3, wherein the vent (110) has a reduced thickness (530, 630, 730, 830) in which at least a portion of the surface of the case (100) is forged.

5. The secondary battery (10) as claimed in claim 4, wherein the at least the portion of the surface of the case (100) is forged from a lower side thereof.

6. The secondary battery (10) as claimed in claim 4, wherein the at least the portion of the surface of the case (100) is forged from an upper side thereof.

7. The secondary battery (10) as claimed in claim 4, wherein the at least the portion of the surface of the case (100) is forged from a lower side and an upper side thereof.

8. The secondary battery (10) as claimed in any of claims 1 to 6, wherein a width (620, 720, 820) of the vent (110) is 60% or smaller of a width (520) of the case (100).

9. The secondary battery (10) as claimed in any of claims 1 to 8, wherein a thickness (630, 730, 830) of the vent (110) is 2/3 or smaller of a thickness (530) of the portion of the sidewall of the case (100) without the vent (110).

10. The secondary battery (10) as claimed in any of claims 1 to 9, wherein the vent (110) comprises a first welding section (112),
the portion of the surface of the case (100) without the vent (110) comprises a second welding section (114), and
the first welding section (112) and the second welding section (114) are located along a centerline, CL, of the surface of the case (100), the center line, CL, being parallel to a longitudinal direction of the surface of the case (100).

11. The secondary battery (10) as claimed in claim 10, wherein a maximum depth (510) of the second welding section (114) is greater than a maximum depth (610, 710, 810) of the first welding section (112).

12. The secondary battery (10) as claimed in claim 10 or 11, wherein a maximum depth (510) of the second welding section (114) is greater than the thickness (630, 730, 830) of the vent (110).

13. The secondary battery (10) as claimed in any of claims 10 to 12, wherein a fracture strength of the second welding section (114) is lower than a fracture strength of the first welding section (112).

14. The secondary battery (10) as claimed in any of claims 1 to 13, further comprising:
a first cap plate (200) covering the open first side-surface (140) of the case (100);
a first terminal (210) penetrating through the first cap plate (200), and electrically connected to a first electrode tab of the electrode assembly (300);
a second cap plate (204) covering the open second side-surface (142) of the case (100); and
a second terminal (214) penetrating through the second cap plate (204), and electrically connected to a second electrode tab of the electrode assembly (300).

15. The secondary battery (10) as claimed in any of claims 1 to 14, wherein the case (100) comprises:
a first long sidewall (120) and a second long sidewall (122) opposite to each other and spaced from each other; and
a first short sidewall (130) and a second short sidewall (132) opposite to each other and spaced from each other,
wherein an area of each of the first short sidewall (130) and the second short sidewall (132) is smaller than an area of each of the first long sidewall (120) and the second long sidewall (122), and
wherein the surface of the case (100) that comprises the vent (110) is one of the first short sidewall (130) or the second short sidewall (132).
